# EUROPEAN PATENT APPLICATION

(11) **EP 4 518 005 A1**
(43) Date of publication of application: **05.03.2025**
(21) Application number: 23883083.0
(22) Date of filing: 25.10.2023
(51) Int. Cl.: H01M 50/503, H01M 50/505, H01M 50/507, H01M 50/51, H01M 50/557, H01M 50/55, H01M 50/502, H01M 50/516, H01M 50/209, H01R 4/48, H01R 13/187, H01R 31/08, H01R 13/11

(54) **TERMINAL STRUCTURE ASSEMBLY INTEGRALLY INCLUDING BUSBAR**

(30) Priority: 27.10.2022 KR 20220140666
(71) Applicant: LG Energy Solution, Ltd., Seoul 07335 (KR)
(72) Inventor: BOK, Cheon Hee, Daejeon 34122 (KR); KIM, Dong Myung, Daejeon 34122 (KR); SUNG, Joo Hwan, Daejeon 34122 (KR)
(74) Representative: Goddar, Heinz J.
(86) International application number: PCT/KR2023/016615
(87) International publication number: WO 2024/090978

(57) **Abstract**

Disclosed herein is a terminal structure assembly, in one example, includes a terminal body providing an upper face and side face connected in a bent form with respect to the upper face, a plurality of terminal structures providing an extension terminal exposed on the side face of the terminal body, and a busbar of conductive material coupled to all of the extension terminals provided on the plurality of terminal structures.

## Description

### [Technical Field]

The present invention relates to a terminal structure assembly integrally provided with a busbar, which is capable of converting an arrangement structure of a positive electrode terminal and/or a negative electrode terminal from unidirectional to bidirectional and at the same time completing an electrical connection between a plurality of secondary batteries.

This application claims the benefit of priority based on Korean Patent Application No. 10-2022-0140666, filed on October 27, 2022, and the entire contents of the Korean patent application are incorporated herein by reference.

### [Background Art]

Unlike primary batteries, secondary batteries can be recharged and have been researched and developed in recent years due to their potential for miniaturization and large capacity. The demand for the secondary battery as an energy source is increasing rapidly due to the technological development and increasing demand for mobile devices, electric vehicles, and energy storage systems, which are emerging in response to the need for environmental protection.

Secondary batteries are categorized into coin batteries, cylindrical batteries, prismatic batteries, and pouch batteries based on the shape of the battery case. In the secondary battery, the electrode assembly mounted inside the battery case is a charging and discharging power generation element consisting of a stacked structure of electrodes and separators.

Electrode assemblies can be broadly categorized into Jellyroll type, which is wound with a separator between the positive and negative electrodes of an active material-coated sheet, Stack type, in which a plurality of positive and negative electrodes is sequentially stacked with an interposed separator, and Stack & Folding type, in which stacked unit cells are wound with a long length of separator film.

Among the various types of secondary batteries, prismatic secondary batteries are mostly composed of positive and negative electrode terminals arranged together on one side, or one on each of the two opposing sides. The arrangement of the positive and negative electrode terminals is determined by the design specifications of various devices containing prismatic secondary batteries, and it is difficult to design the arrangement structure of the positive and negative electrode terminals separately in the same form factor according to these design specifications.

In addition, in a battery module or pack unit comprising a plurality of secondary batteries, connecting individual unidirectional secondary batteries to a busbar through the side requires a variety of components, which are costly and laborious to mount and connect to the busbar.

### [Disclosure]

### [Technical Problem]

The present invention is directed to provide a terminal structure assembly that can easily change the arrangement structure of the positive and negative electrode terminals provided in a plurality of prismatic secondary batteries to a bidirectional arrangement structure without any design changes, while simultaneously completing the electrical connection between them at once.

However, the technical problem to be solved by the present invention is not limited to the above-described problem, and other problems not mentioned can be clearly understood by a person skilled in the art from the description of the invention described below.

### [Technical Solution]

The present invention relates to a terminal structure assembly, in one example including a terminal body providing an upper face and side face connected in a bent form with respect to the upper face, a plurality of terminal structures providing an extension terminal exposed on the side face of the terminal body, and a busbar of conductive material coupled to all of the extension terminals provided on the plurality of terminal structures.

In one embodiment of the present invention, the plurality of terminal structures are aligned in a row, and the busbar is coupled to the aligned extension terminals at once.

In one example, the busbar may be welded to the extension terminals.

In another embodiment of the present invention, a side end of the terminal structure is provided with a fastening part into which the busbar is inserted.

Here, the fastening part may be provided with a connection socket wherein the extension terminals are formed with a bending.

In addition, the connection socket may form a spring structure that elastically secures the busbar, and the free end of the connection socket may form a winding curved surface.

Further, the busbar inserted into the connection socket may be welded to the extension terminal.

Meanwhile, the present invention provides a secondary battery comprising a plurality of secondary batteries having positive and negative electrode terminals spaced apart on an upper face of a battery case having a hexahedral shape, and a terminal structure assembly having the above configuration, wherein the terminal structure assembly is coupled to the plurality of secondary batteries arranged in a row, and the busbar electrically connects the plurality of secondary batteries.

In one example, the terminal structure assembly provides two terminal structures, wherein the plurality of secondary batteries is aligned along a thickness direction with electrode terminals of different polarities facing electrode terminals of adjacent other secondary batteries, and the plurality of secondary batteries may be connected in series by alternately coupled to both sides of the plurality of secondary batteries.

In another example, the terminal structure assembly provides a number of terminal structures corresponding to a number of the plurality of secondary batteries, wherein the plurality of secondary batteries are aligned along a thickness direction such that electrode terminals of the plurality of secondary batteries face electrode terminals of the same polarity as electrode terminals of other adjacent secondary batteries, and the plurality of secondary batteries may be connected in parallel by coupling each of both sides of the plurality of secondary batteries.

### [Advantageous Effects]

The terminal structure assembly of the present invention having the above configuration, wherein a plurality of terminal structures form a single assembly using a busbar as a medium, and by applying the terminal structure assembly to a plurality of secondary batteries, an electrical connection to a plurality of secondary batteries sharing the terminal structure assembly is completed, and an individual secondary battery can be converted to a secondary battery of a bidirectional terminal at once.

Accordingly, by applying the terminal structure assembly of the present invention to a battery module or pack comprising a plurality of secondary batteries, the terminal arrangement switching and busbar connection work of all secondary batteries can be performed at once at the battery module/pack unit instead of at the individual battery cell unit, thereby reducing the manufacturing cost and labor of the battery module or pack.

However, the technical effects that can be obtained through the present invention is not limited to the above-described effects, and other effects not mentioned can be clearly understood by a person skilled in the art from the description of the invention described below.

### [Brief Description of the Drawings]

Because the following drawings attached to the present specification illustrate exemplary embodiments of the present invention and serve to facilitate understanding of the technical idea of the present invention together with the detailed description of the invention described below, the present invention should not be limitedly interpreted on the basis of the drawings.
FIG. 1 is a drawing of a structure with a terminal structure applied to a prismatic secondary battery.
FIG. 2 is a drawing of a plurality of terminal structures coupled to a busbar.
FIG. 3 is a drawing of one embodiment of a terminal structure assembly.
FIGS. 4 and 5 illustrate other embodiments of the terminal structure assembly.
FIGS. 6 and 7 illustrate exemplary embodiments of applying the terminal structure assembly to a plurality of secondary batteries.

### [Best Mode]

The present invention may have various modifications and various embodiments, and thus specific embodiments thereof will be described in detail below.

However, it should be understood that the present invention is not limited to the specific embodiments, and includes all modifications, equivalents, or alternatives within the spirit and technical scope of the present invention.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present invention, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present invention relates to a terminal structure assembly, in one example, includes a terminal body providing an upper face and side face connected in a bent form with respect to the upper face, a plurality of terminal structures providing extension terminals exposed on the side face of the terminal body, and a busbar of conductive material coupled to all of the extension terminals provided on the plurality of terminal structures.

The terminal structure assembly of the present invention, provided with the above configuration, has a plurality of terminal structures forming a single assembly with a busbar as a medium, and by applying the terminal structure assembly to a plurality of secondary batteries, it is possible to convert individual secondary batteries into secondary batteries with bidirectional terminals at once, and an electrical connection to a plurality of secondary batteries sharing the terminal structure assembly is completed.

Accordingly, by applying the terminal structure assembly of the present invention to a battery module or pack comprising a plurality of secondary batteries, the terminal arrangement switching and busbar connection operation for all secondary batteries can be performed at once at the battery module/pack unit instead of at the individual battery cell unit, thereby reducing the manufacturing cost and labor of the battery module or pack.

### [Mode for Invention]

Hereinafter, specific embodiments of a secondary battery of the present invention will be described in detail with reference to the accompanying drawings. For reference, the directions of front, back, up, down, left, and right used in the following description to designate relative positions are for the purpose of understanding the invention and refer to the directions shown in the drawings unless otherwise specified.

### [first embodiment]

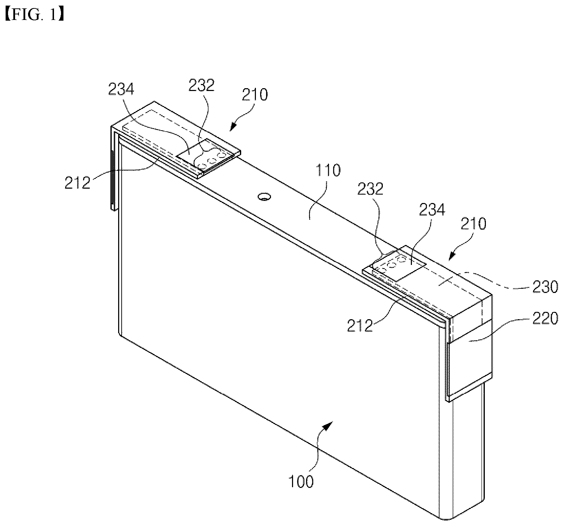

FIG. 1 is an attached drawing to illustrate a configuration for converting a secondary battery 10 already manufactured with a unidirectional terminal arrangement to a bidirectional terminal arrangement, using a terminal structure 210 included in the terminal structure assembly 200 of the present invention.

Referring to FIG. 1, reference is made to a secondary battery 10, particularly a unidirectional prismatic secondary battery 10 having a pair of electrode terminals 120, that is, a positive electrode terminal 122 and a negative electrode terminal 124, spaced apart on a cap plate 110 forming an upper face of a battery case 100 having a hexahedral shape. Here, the prismatic secondary battery 10 illustrated in the drawings is an example, and the ratio of width to length and height may vary, and for convenience of explanation, the directions of front and rear and up and down and left and right will be referred to with reference to the attached drawings. For example, one side of the battery case 100 on which the positive electrode terminal 122 and the negative electrode terminal 124 are disposed is called the upper face, and the opposite side facing it is called the lower face.

The illustrated secondary battery 10 includes a terminal structure 210. The terminal structure 210 is a right-angled, bent structure that is coupled to at least one upper edge of the battery case 100, and includes a terminal body 212 and an extension terminal 220.

The terminal body 212 refers to a body of the terminal structure 210, including an upper face 213 that encloses either the positive electrode terminal 122 or the negative electrode terminal 124 from being exposed to the outside, and a side face 214 that is coupled to a side extending from the upper face of the battery case 100. While the drawings show an example where the terminal structure 210 is coupled to both the positive electrode terminal 122 and the negative electrode terminal 124, respectively, according to an embodiment, the terminal structure 210 may optionally be coupled to only one of the positive electrode terminal 122 and the negative electrode terminal 124.

The extension terminal 220 corresponds to a connection terminal that is electrically connected to the positive electrode terminal 122 or the negative electrode terminal 124 and extends to the side face 214 of the terminal body 212. In other words, the positive electrode terminal 122 or negative electrode terminal 124 is enclosed by the terminal body 212 and is not exposed to the outside, so the extension terminal 220 functions as a new positive electrode terminal 122 or negative electrode terminal 124 moved to the side face of the battery case 100 instead of the upper face.

In addition, the terminal body 212 is made of an insulating material, such as an electrically insulating resin or rubber material, so that the positive electrode terminal 122 or negative electrode terminal 124 covered on the upper face 213 of the terminal body is in an inactive state electrically isolated from the outside. In other words, in the secondary battery 10 with the terminal structure 210, the existing positive electrode terminal 122 or negative electrode terminal 124 no longer functions as a connection terminal, and the extension terminal 220 on the terminal structure 210 functions as a new positive electrode terminal 122 or negative electrode terminal 124 that has moved the position.

As such, the position of the positive electrode terminal 122 and the negative electrode terminal 124, which are disposed together on the upper face of the battery case 100, can be freely changed without a separate design change simply by applying the terminal structure 210. Accordingly, the present invention including the terminal structure 210 enables the position of the positive electrode terminal 122 and/or the negative electrode terminal 124 to be changed freely and easily for a secondary battery of the same form factor, thereby reducing the production cost of various types of prismatic secondary batteries.

In the illustrated embodiment, the positive electrode terminal 122 and/or the negative electrode terminal 124 are electrically connected to the extension terminal 220 through an extension wire 230, wherein the extension wire 230 leading to the extension terminal 220 forms a joint part 232 with respect to the positive electrode terminal 122 and/or the negative electrode terminal 124, wherein the joint part 232 provides a mechanically and electrically robust connection between the extension wire 230 and the electrode terminal 120. For example, the joint part 232 may be formed by welding.

The extension wire 230 is not exposed outside of the terminal body 212. For example, the extension wire 230 may be embedded within the terminal body 212 of an electrically insulating resin material, such as by insert molding, etc. In addition, the joint part 232 is also insulated from the outside. The external insulation of the joint part 232 may be provided by at least one of an insulating cover, an insulating tape, and a curable insulating layer.

Here, a curable insulating layer refers to an insulating layer formed by curing after a flowable insulating resin is applied to the joint part 232, and in FIG. 1, a configuration in which a film form of insulation tape 234 having an adhesive layer insulates the joint part 232 is shown.

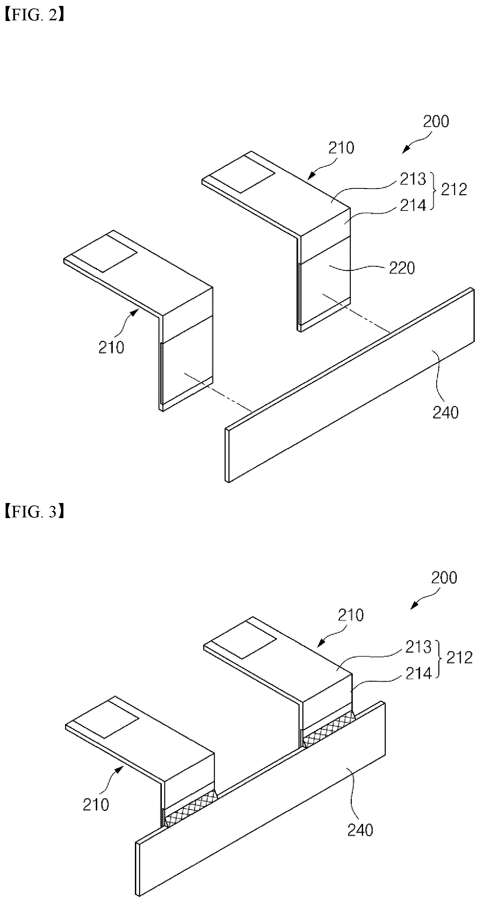

Based on such a basic configuration of the terminal structure 210, a terminal structure assembly 200 according to the present invention will be described. FIGS. 2 and 3 illustrate a terminal structure assembly 200 according to one embodiment of the present invention.

Referring to FIGS. 2 and 3, the terminal structure assembly 200 of the present invention includes a plurality of terminal structures 210, and also includes a busbar 240 made of a conductive material that is coupled to all of the extension terminals 220 provided on the plurality of terminal structures 210. With the medium of the busbar 240, the plurality of terminal structures 210 form a single assembly, and by applying the terminal structure assembly 200 to the plurality of secondary batteries 10, an electrical connection is made to the plurality of secondary batteries 10 sharing the terminal structure assembly 200, with individual secondary batteries 10 be able to be converted to bi-directional terminals at once. This will be described in more detail in the corresponding sections below.

As shown, the plurality of terminal structures 210 are aligned in a row with terminal body 212 facing the same direction, and busbars 240 are coupled to the aligned extension terminals 220 at once. The busbars 240 are made of a conductive material, so that the extension terminals 220 of each terminal structure 210 connected by the busbars 240 are electrically connected to each other. In one example, the busbars 240 may be welded to the extension terminals 220.

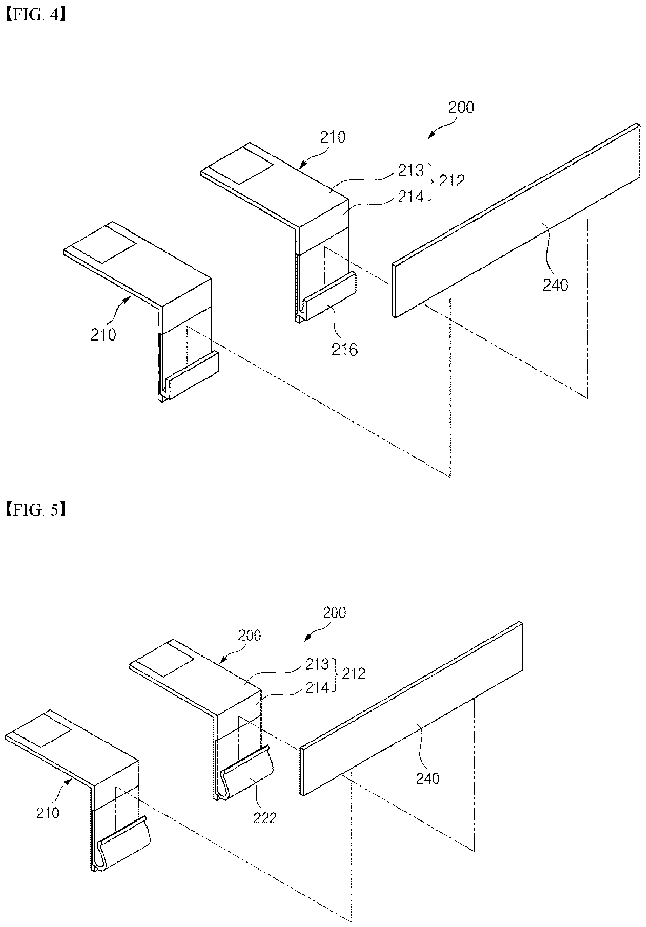

FIGS. 4 and 5 illustrate various coupling structures of the extension terminal 220 and the busbar 240. According to the embodiment shown in FIG. 4, a side end of the terminal structure 210 is provided with a fastening part 216 into which the busbar 240 is inserted and coupled. The fastening part 216 forms a gap corresponding to a thickness of the busbar 240 with respect to the extension terminal 220, such that the busbar 240 can be inserted and secured in the gap between the fastening part 216 and the extension terminal 220. The fastening part 216 may be separately manufactured and mounted to the end of the extension terminal 220, or it may be formed by bending the extension terminal 220, which may be made of metal material.

FIG. 5 illustrates one embodiment of bending an extension terminal 220, which is made of metal material, to form a fastening part 216, wherein the fastening part 216 has a connection socket 222 into which the extension terminal 220 is bent. The connection socket 222 is a connection groove deep enough to be inserted into substantially all of the busbar 240 and may form a spring structure that elastically secures the busbar 240. In other words, as shown in FIG. 5, the connection socket 222 may form a curved, deformable cross-section that is elastic with respect to the busbar 240. The support structure of the busbar 240 is enhanced by the connection socket 222 forming a spring structure.

In addition, the free end of the connection socket 222 may be formed a winding curved surface. This is to prevent the busbar 240 from being scratched by the entrance edge of the connection socket 222 as it is inserted into the connection socket 222, and to prevent the busbar 240 with a damaged surface from being easily corroded.

Here, even in the case of the terminal structure 210 having the fastening part 216 of FIGS. 4 and 5, the busbar 240 inserted into the connection socket 222 may be welded to the extension terminal 220 for more rigid support of the busbar 240.

### [second embodiment]

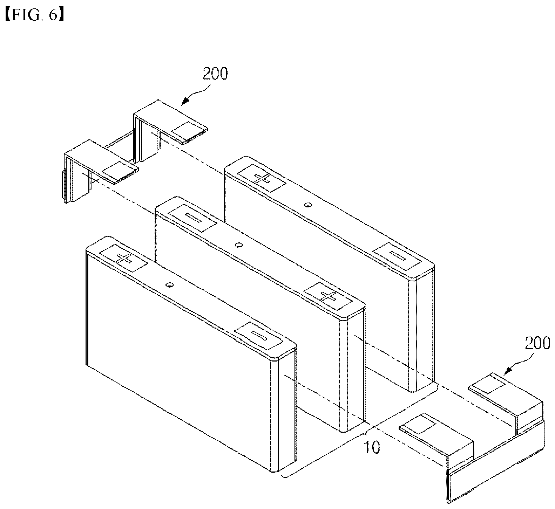

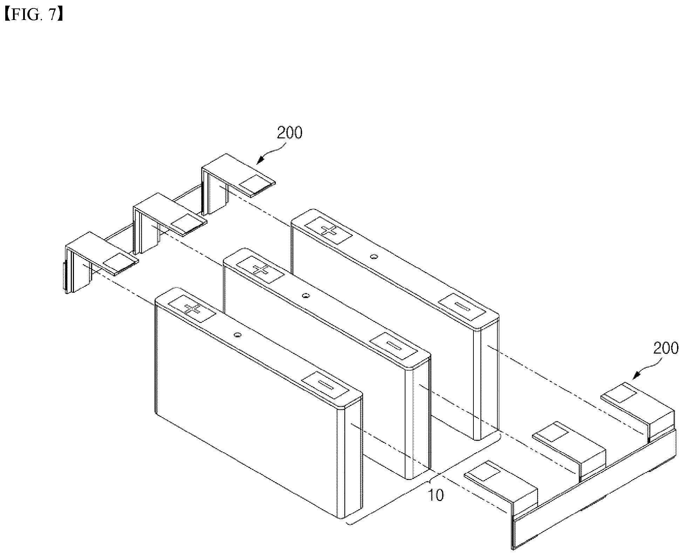

FIGS. 6 and 7 are exemplary drawings of an application of the terminal structure assembly 200 described in detail in the first embodiment to a plurality of secondary batteries 10, and the advantages of the terminal structure assembly 200 of the present invention will be more clearly understood with reference to FIGS. 6 and 7.

The depicted secondary battery 10 relates to a unidirectional secondary battery 10 having a positive electrode terminal 122 and a negative electrode terminal 124 spaced apart on an upper face of a battery case 100 forming a hexahedral shape. A plurality of such secondary batteries 10 are arranged in a row along a thickness direction.

The terminal structure assembly 200, according to a first embodiment, is coupled to a plurality of secondary batteries 10 arranged in a row. In other words, as described with reference to FIG. 1, the terminal body 212 of each terminal structure 210 is coupled to wrap around the positive electrode terminal 122 or negative electrode terminal 124 of the upper face of the secondary battery 10 corresponding to itself, and accordingly, the plurality of secondary batteries 10 coupled to the terminal structure assembly 200 are collectively switched in terminal arrangement to a bidirectional secondary battery 10.

Further, by the busbar 240 coupled to the extension terminal 220 of each terminal structure 210, all of the terminal structures 210 of the terminal structure assembly 200 are in an electrically connected state, thereby automatically electrically connecting the plurality of secondary batteries 10 by the terminal structure assembly 200.

FIG. 6 illustrates an example of three secondary batteries 10 are connected in series by the terminal structure assembly 200. While three secondary batteries 10 are exemplified in the drawings, it will be apparent to those of ordinary skill in the art that such a series connection structure can be extended to four or more secondary batteries 10. Also, while the terminal structure assembly 200 of FIGS. 2 and 3 is shown in the drawings, it will be apparent that the terminal structure assembly 200 of FIGS. 4 and 5 can be applied.

Referring to FIG. 6, the terminal structure assembly 200 provides two terminal structures 210. Further, the plurality of secondary batteries 10 are aligned along a thickness direction such that electrode terminals 120 of different polarities face electrode terminals 120 of other neighboring secondary batteries 10, the terminal structure assembly 200 having two terminal structures 210 are alternately coupled to both sides of the plurality of secondary batteries 10 (alternately coupled one to each side while skipping one secondary battery), thereby the plurality of secondary batteries 10 are connected in series.

FIG. 7 illustrates a case where three secondary batteries 10 are connected in parallel. In an example of FIG. 7, the terminal structure assembly 200 has a number of terminal structures 210 corresponding to the number of the plurality of secondary batteries 10 (three in FIG. 7). Further, the plurality of secondary batteries 10 are aligned along a thickness direction such that electrode terminals 120 of the same polarity as electrode terminals 120 of other adjacent secondary batteries 10 face each other, and the plurality of secondary batteries 10 are connected in parallel by the terminal structure assembly 200 coupling to each of two sides of the plurality of secondary batteries 10.

As such, by applying the terminal structure assembly 200 of the present invention, the individual secondary batteries 10 are converted from unidirectional secondary batteries 10 to bidirectional secondary batteries 10 at once, and the electrical connection to the plurality of secondary batteries 10 to which the terminal structure assembly 200 is applied is completed. Thus, when the terminal structure assembly 200 of the present invention is applied to a battery module or pack having a plurality of unidirectional secondary batteries 10, the battery module/pack can reduce manufacturing costs and time, etc.

For reference, although not shown, by combining the connection structures of FIGS. 6 and 7, it is easy to implement a variety of series and parallel connections in addition to series and parallel connections.

As above, the present invention has been described in more detail through the drawings and embodiments. However, since the configuration described in the drawings or embodiments described herein is merely one embodiment of the present invention and do not represent the overall technical spirit of the invention, it should be understood that the invention covers various equivalents, modifications, and substitutions at the time of filing of this application.

### [Description of Reference Numerals]

10: secondary battery
100: battery case
110: cap plate
120: electrode terminal
122: positive electrode terminal
124: negative electrode terminal
200: terminal structure assembly
210: terminal structure
212: terminal body
213: upper face
214: side face
216: fastening part
220: extension terminal
222: connection socket
230: extension wire
232: joint part
234: insulation tape
240: busbar

## Claims

1. A terminal structure assembly comprising:
a plurality of terminal bodies each having an upper face and a side face connected to the upper face, each terminal body being bent at a location where the upper face meets the side face;
a plurality of terminal structures including an extension terminal exposed on the side face of each terminal body; and
a busbar of conductive material coupled to all of the extension terminals of the plurality of terminal structures.

2. The terminal structure assembly of claim 1, wherein the plurality of terminal structures are aligned in a row.

3. The terminal structure assembly of claim 2, wherein the busbar is welded to the extension terminals.

4. The terminal structure assembly of claim 1, wherein a side end of each terminal structure has a fastening part into which the busbar is inserted.

5. The terminal structure assembly of claim 4, wherein each fastening part has a connection socket and the extension terminals each have a bent shape.

6. The terminal structure assembly of claim 5, wherein each connection socket has a spring structure that elastically secures the busbar therein.

7. The terminal structure assembly of claim 6, wherein a free end of each connection socket has a winding curved surface.

8. The terminal structure assembly of claim 5, wherein the busbar is welded to each extension terminal.

9. A secondary battery assembly, comprising:
the terminal structure assembly of claim 1; and
a plurality of secondary batteries arranged in a row, each secondary battery having positive and negative electrode terminals spaced apart on an upper face of a battery case having a hexahedral shape,
wherein the terminal structure assembly is coupled to the plurality of secondary batteries, and the busbar electrically connects the plurality of secondary batteries to one another.

10. The secondary battery assembly of claim 9, wherein the terminal structure assembly has two terminal structures, and
the plurality of secondary batteries is aligned along a thickness direction with electrode terminals of different polarities facing electrode terminals of adjacent ones of the secondary batteries, and the plurality of secondary batteries is connected in series.

11. The secondary battery assembly of claim 9, wherein the terminal structure assembly has a number of terminal structures equal to a number of the plurality of secondary batteries,
the plurality of secondary batteries are aligned with one another along a thickness direction such that electrode terminals of the plurality of secondary batteries face electrode terminals of the same polarity as electrode terminals of adj acent ones of the secondary batteries, and
the plurality of secondary batteries is connected in parallel.
